# FASCICULE DE BREVET EUROPEEN

(11) **EP 0 670 211 B1**
(45) Date de publication et mention de la délivrance du brevet: **29.04.1998**
(21) Numéro de dépôt: 95420046.5
(22) Date de dépôt: 28.02.1995
(51) Int. Cl.: B29C 45/37

(54) **Dispositif de marquage indexable pour moule**
Indexierbarer Markierungsvorrichtung für Formen
Indexable marking device for moulds

(30) Priorité: 01.03.1994 FR 9402565
(43) Date de publication de la demande: 06.09.1995
(73) Titulaire: Picco, Bernard, 01870 Groissiat (FR); Picco, Patrick, 01100 Oyonnax (FR)
(72) Inventeur: Picco, Bernard, 01870 Groissiat (FR); Picco, Patrick, 01100 Oyonnax (FR)
(74) Mandataire: Maureau, Philippe

(56) Documents cités:
- CH-A- 679 917
- DE-U- 9 314 975
- US-A- 4 384 702

## Description

La présente invention concerne un dipositif de marquage indexable pour moule, pour le moulage par injection ou pressage de pièces en matière synthétique ou de pièces de fonderie sous pression.

Cette invention a rapport au moulage des pièces qui doivent être identifiées, notamment par une date de fabrication. Pour ce faire, un dispositif "dateur", couvrant une certaine durée, est positionné dans le moule.

De manière connue, un tel dispositif est constitué par un tableau à double entrée portant par exemple les mois et les années. Ce calendrier est gravé directement dans le moule, ou bien sur un bloc rapporté. Des poinçonnages successifs des cases de ce calendrier modifient l'empreinte laissée sur la pièce moulée, ainsi identifiable.

Ce dispositif est remarquable par sa simplicité, mais souffre d'inconvénients. La surface du calendrier doit être relativement importante pour permettre un poinçonnage et une lecture aisés. De plus, une gravure dans le moule est permanente et irréversible, ce qui pose problème lorsque la durée couverte par le calendrier vient à son terme. La gravure et le poinçonnage peuvent également révéler des difficulés d'accès, tandis que l'utilisation d'un bloc rapporté nécessite un dispositif de fixation supplémentaire.

Un autre dispositif connu de EP-A-0 194 522 est constitué par un dateur à indexation, logé dans un alésage traversant la paroi du moule et dont la surface frontale, destinée au marquage, débouche dans le moule. Cette face comporte une partie annulaire gravée et un corps central coaxial, gravé lui aussi, pivotant dans le corps annulaire. En pratique, les gravures annulaires sont des chiffres indicateurs, journaliers, mensuels ou annuels, et le corps central porte une flèche, laquelle flèche est formée d'une rainure pouvant coopérer avec un outil du type tournevis pour la manoeuvre en rotation du corps central. La position angulaire relative du corps annulaire et du corps central est indexée, chaque indexation correspondant à une position de la pointe de la flèche indiquant une date donnée.

Selon ce document EP-A-0 194 522 l'indexation consiste à utiliser une bille de positionnement, placée dans un alésage débouchant du corps central, perpendiculaire à l'axe de ce dernier, associée à un dispositif élastique et coopérant avec des rainures longitudinales intérieures du corps annulaire.

Ce dispositif présente l'inconvénient d'avoir un système d'indexation non symétrique. La bille unique, placée latéralement sur le corps central exerce des efforts qui tendent à mettre le corps central en biais dans le corps annulaire, augmentant le risque de fuite de matière entre ces deux corps au cours du moulage et de passage de gaz provoquant un grippage. De plus, le dateur doit être de tailles diverses pour s'adapter aux différents moules et pièces. Or, il est difficile de réduire le dispositif de bille de positionnement dans les mêmes proportions que le reste du dateur.

L'invention vise à fournir un dateur du dernier type cité, possédant un système d'indexation composé d'un minimum de pièces, pouvant être symétrique, et d'encombrement réduit.

A cet effet, le dispositif qu'elle concerne est du type comprenant un corps tubulaire traversant une paroi de moule, dont un épaulement plaqué contre une surface épaulée de l'ouverture traversant la paroi de ce moule, un corps central coaxial pivotant dans le corps tubulaire, lequel corps tubulaire possède une surface annulaire, coïncidant avec la surface interne du moule, gravée, tandis qu'une extrémité du corps central affleure la surface annulaire et est également gravée, les deux corps étant maintenus dans une position angulaire relative donnée au moyen d'un dispositif d'indexation élastique. Un tel dispositif est connu de EP-A-0 194 522.

Suivant l'invention, le dispositif d'indexation comprend une gorge annulaire, ménagée dans la tête du corps central, dans laquelle est insérée une lame-ressort de forme cylindrique ouverte, possédant au moins une déformation radiale vers l'extérieur, qui forme un bossage destiné à coopérer avec des crans d'indexation du corps tubulaire de l'élément de marquage, et des moyens d'immobilisation en rotation dans la gorge.

Lors de la rotation du corps central axial, les bossages, qui possèdent une certaine élasticité, se déforment au passage des parties en saillie des crans d'indexation puis retrouvent leur forme initiale dans les cavités suivantes.

Afin d'améliorer les possibilités de déformation des bossages d'indexation, la gorge de la tête du corps central coaxial possède au moins un méplat d'effacement en regard des déformations radiales vers l'extérieur formant bossages.

La position de la lame-ressort dans la gorge de la tête du corps central coaxial est fixe. Pour ce faire, les moyens d'immobilisation, en rotation dans la gorge de la lame-ressort, sont constitués par au moins une patte faisant saillie latéralement d'un bord de la lame-ressort, coopérant avec au moins un évidement ménagé dans la tête du corps central coaxial et qui débouche latéralement dans la gorge.

Avantageusement, les zones du corps central adjacentes à chaque patte de la lame-ressort sont repoussées pour réaliser une immobilisation de cette patte par sertissage.

Dans la forme de réalisation la plus simple, la lame-ressort possède une seule déformation radiale vers l'extérieur formant un bossage, approximativement en son milieu. Dans cette forme réalisation, elle possède au moins une patte latérale d'immobilisation à chacune de ses extrémités.

Le dispositif d'indexation peut également être déterminé de façon à ce que les efforts créés par le système d'indexation sur les pièces en mouvement relatif s'équilibrent : La lame-ressort possède alors deux déformations radiales, formant deux bossages, diamétralement opposées, au moins une patte d'immobilisation se trouvant alors au milieu de la lame-ressort.

De plus, les pattes d'immobilisation vont par paire et de part et d'autre de la lame-ressort, et les évidements d'accrochage avec lesquels elles coopèrent sont ménagés en conséquence.

Ceci permet une meilleure tenue de la lame-ressort dans la gorge et évite les déformations parasites.

Enfin, la gorge possède un méplat de fermeture contre lequel sont rabattues les extrémités de la lame-ressort.

L'invention sera mieux comprise à l'aide de la description suivante, en référence au dessin annexé, mettant en relief les divers éléments constitutifs fonctionnels ainsi que les avantages à en attendre.
Figure 1 est une vue en perspective des trois pièces constitutives du dateur selon l'invention, en position démontée ;
Figure 2 est une vue de côté du corps central ;
Figure 3 est une vue en coupe de la tête du corps central ;
Figure 4 est une vue de dessus de la lame-ressort ;
Figure 5 est une vue du dateur selon l'invention en place dans une paroi de moule.

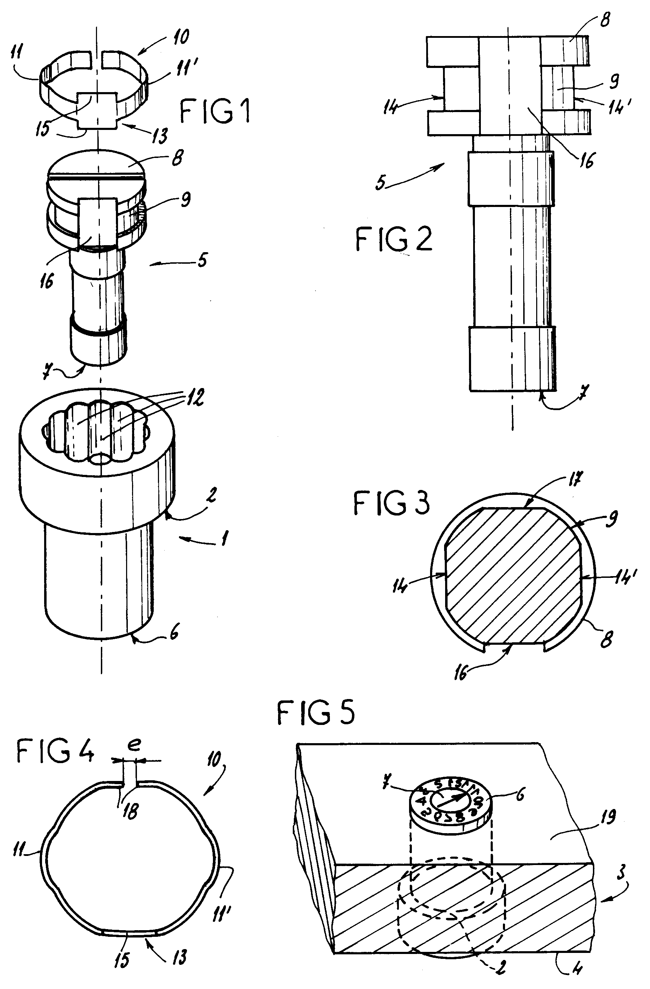

Comme il ressort de la figure 1, l'élément de moule dit "dateur" est constitué essentiellement de deux corps **1** et **5**. Le corps **1** est un corps tubulaire, possèdant un épaulement **2** proche d'une première extrémité, et au niveau de son autre extrémité, une surface annulaire **6**, normale à l'axe du corps tubulaire **1**. Cette surface annulaire **6** comporte des gravures destinées à marquer une pièce de matière plastique obtenue par moulage dans un moule dans lequel est inséré le dateur. A la figure 5, le dateur est en position dans la paroi du moule. L'épaulement **2** porte sur une surface épaulée **4**, tandis que la surface annulaire **6** coïncide approximativement avec la surface intérieure **19** du moule. Un dispositif extérieur au moule, non représenté, maintient le dateur en position.

Le corps **5** est un corps central coaxial avec le corps tubulaire **1** et pivotant dans ce corps tubulaire **1**. Ce corps central **5** possède une extrémité **7** normale à l'axe du dateur, qui affleure la surface annulaire **6**. L'extrémité **7** est gravée de telle façon que soient ménagés un repère désaxé et une empreinte pouvant coopérer avec un outil classique pour la manoeuvre en rotation du corps central **5**. Par exemple, et comme à la figure 5, une flèche gravée présente, par sa pointe, un repère désaxé et, par sa tige, une partie femelle pouvant coopérer avec un tournevis.

La position angulaire relative du corps central **5** et du corps tubulaire **1** est indexée de manière à faire coïncider successivement le repère désaxé porté sur l'extrémité **7** avec les différentes gravures réparties sur la surface annulaire **6**. Un changement de date s'effectue en faisant pivoter le corps **5** dans le corps **1** d'un cran d'indexation à un autre. Cette opération se fait par l'intérieur du moule en manoeuvrant le corps central comme précédemment expliqué.

Afin de réaliser l'indexation, le corps central **5** possède, en son extrémité opposée à l'extrémité **7** gravée, une tête **8** dans laquelle est ménagée une gorge annulaire **9**. Cette gorge **9** reçoit une lame-ressort **10**. Comme montré aux figures 1 et 4, cette lame de forme globalement cylindrique et ouverte, présente deux déformations radiales vers l'extérieur, formant des bossages **11** et **11**', diamétralement opposées, lesquelles coopèrent avec des crans d'indexation **12** longitudinaux, ménagés dans l'intérieur du corps tubulaire **1**. Lors de la rotation du corps central **5** dans le corps tubulaire **1**, les bossages s'effacent devant les saillies des crans **12** et ceci d'autant mieux que la gorge annulaire **9** recevant la lame-ressort **10** possède des méplats **14** et **14**' en regard des bossages **11** et **11**'. L'espace, noté "e" à la figure 4, entre les deux extrémités **18** de la lame-ressort **10** en position de repos, permet d'absorber les déformations dues à cet effacement.

La lame-ressort **10** est fixée angulairement et axialement dans la gorge **9**. La position axiale est assurée par les bords de la gorge **9**. La position angulaire, ainsi que le montrent les figures 1, 2, 3, est assurée par une caractéristique selon laquelle la tête du corps central **5** possède des évidements **16** débouchant latéralement dans la gorge **9** et de part et d'autre de celle-ci, lesquels évidements **16** reçoivent des pattes **15** faisant saillie latéralement des bords de la lame-ressort **10** et de part et d'autre de celle-ci.

Ainsi en position, les pattes s'opposent à la rotation de la lame-ressort **10** dans la gorge **9**.

Enfin, les extrémités **18** de la lame-ressort **10** sont rabattues contre un méplat de fermeture **17**. Ceci permet de limiter avantageusement les frottements des extrémités **18** de la lame-ressort **10** contre l'intérieur du corps tubulaire **1** et d'éviter en particulier leur accrochage sur les parties en saillie des crans d'indexation **12**.

La description précédente n'est évidemment pas limitative : elle rend compte d'une forme de réalisation préférée de l'invention. Cependant, des dispositifs pouvant être considérés comme moyens équivalents, assurant les mêmes fonctions, tomberaient dans le domaine de la protection revendiquée. Notamment, d'autres dispositions, concernant la forme des bossages ou des pattes d'accrochage, ainsi que des éléments gravés, pourraient être envisagées sans sortir pour autant du cadre de l'invention. En outre, ce dispositif pourrait être appliqué à un autre type d'indexation qu'au marquage d'une date.

## Revendications

1. Dispositif de marquage indexable pour moule, pour le marquage de pièces en matière plastique ou de pièces de fonderie sous pression, du type comprenant un corps tubulaire (1) traversant une paroi de moule (3), dont un épaulement (2) plaque contre une surface épaulée de l'ouverture traversant la paroi de ce moule (3), un corps central coaxial (5) pivotant dans le corps tubulaire (1), lequel corps tubulaire (1) possède une surface annulaire (6) coïncidant avec la surface interne (19) du moule (3), gravée, tandis qu'une extrémité (7) du corps central (5) affleure la surface annulaire (6) et est également gravée, les deux corps étant maintenus dans une position angulaire relative au moyen d'un dispositif d'indexation élastique, caractérisé en ce que le dispositif d'indexation comprend une gorge annulaire (9), ménagée dans la tête (8) du corps central (5), dans laquelle est insérée une lame-ressort (10) de forme cylindrique ouverte, possèdant au moins une déformation radiale vers l'extérieur qui forme un bossage (11) destiné à coopérer avec des crans d'indexation (12) du corps tubulaire (1) de l'élément de marquage, et des moyens d'immobilisation (13) en rotation dans la gorge (9).

2. Dispositif selon la revendication 1, caractérisé en ce que la gorge (9) de la tête (8) du corps central (5) possède au moins un méplat d'effacement (14) en regard des déformations radiales vers l'extérieur formant bossages (11).

3. Dispositif selon la revendication 1, caractérisé en ce que les moyens d'immobilisation (13) en rotation de la lame-ressort (10) dans la gorge (9) sont constitués par au moins une patte (5) faisant saillie latéralement d'un bord de la lame-ressort (10), coopérant avec au moins un évidement (16) ménagé dans la tête (8) du corps central (5) et qui débouche latéralement dans la gorge (9).

4. Dispositif selon la revendication 3, caractérisé en ce que les zones du corps central (5) adjacentes à chaque patte (15) de la lame-ressort (10) sont repoussées pour réaliser une immobilisation de cette patte par sertissage.

5. Dispositif selon l'une quelconque des revendications 1 à 4, caractérisé en ce que la lame-ressort (10) possède une seule déformation radiale vers l'extérieur formant un bossage (11).

6. Dispositif selon l'une quelconque des revendications 1 à 4, caractérisé en ce que la lame-ressort (10) possède deux déformations radiales vers l'extérieur formant deux bossages (11) et (11'), diamétralement opposés .

7. Dispositif selon l'une quelconque des revendications 1 à 6, caractérisé en ce que la lame-ressort (10) possède au moins une patte latérale d'immobilisation (15) à chacune de ses extrémités.

8. Dispositif selon l'une quelconque des revendications 1 à 7, caractérisé en ce que la lame-ressort (10) possède au moins une patte latérale d'immobilisation (15) en son milieu.

9. Dispositif selon l'une quelconque des revendications 1 à 7, caractérisé en ce que les pattes latérales d'immobilisation (15) vont par paire de part et d'autre de la lame-ressort (10) et que les évidements d'accrochage (16) avec lesquelles elles coopèrent sont ménagés en conséquence.

10. Dispositif selon l'une quelconque des revendications 1 à 9, caractérisé en ce que la gorge (9) possède un méplat de fermeture (17) contre lequel sont rabattues les extrémités (18) de la lame-ressort (10).

## Claims

1. Indexable marking device for a mould, for marking plastic parts or pressure diecast parts, of the type comprising a tubular body (1) passing through a wall of a mould (3), on which a shoulder (2) presses against a shouldered surface of the opening passing through the wall of this mould (3), a coaxial central body (5) pivoting in the tubular body (1), which tubular body (1) has an annular surface (6) coinciding with the engraved internal surface (19) of the mould (3), whilst one end (7) of the central body (5) is flush with the annular surface (6) and is also engraved, the two bodies being held in a relative angular position by means of an elastic indexing device, characterised in that the indexing device comprises an annular groove (9), formed in the head (8) of the central body (5), in which is inserted a spring blade (10) of open cylindrical shape, having at least one outward radial deformation which forms a protrusion (11) designed to cooperate with indexing notches (12) in the tubular body (1) of the marking element, and means of immobilisation (13) with respect to rotation in the groove (9).

2. Device according to Claim 1, characterised in that the groove (9) in the head (8) of the central body (5) has at least one retraction flat (14) opposite the outward radial deformations forming protrusions (11).

3. Device according to Claim 1, characterised in that the means (13) of immobilising the spring blade (10) with respect to rotation in the groove (9) consist of at least one lug (5) projecting laterally from an edge of the spring blade (10), cooperating with at least one recess (16) formed in the head (8) of the central body (5) and which opens out laterally into the groove (9).

4. Device according to Claim 3, characterised in that the areas of the central body (5) adjacent to each lug (15) on the spring blade (10) are planished in order to achieve an immobilisation of this lug by crimping.

5. Device according to any one of Claims 1 to 4, characterised in that the spring blade (10) has a single outward radial deformation forming a protrusion (11).

6. Device according to any one of Claims 1 to 4, characterised in that the spring blade (10) has two outward radial deformations forming two diametrically opposed protrusions (11) and (11').

7. Device according to any one of Claims 1 to 6, characterised in that the spring blade (10) has at least one lateral immobilisation lug (15) at each of its ends.

8. Device according to any one of Claims 1 to 7, characterised in that the spring blade (10) has at least one lateral immobilisation lug (15) at its middle.

9. Device according to any one of Claims 1 to 7, characterised in that the lateral immobilisation lugs (15) go in pairs on each side of the spring blade (10) and in that the attachment recesses (16) with which they cooperate are formed accordingly.

10. Device according to any one of Claims 1 to 9, characterised in that the groove (9) has a closure flat (17) against which the ends (18) of the spring blade (10) are folded.

## Patentansprüche

1. Indexierbare Markiervorrichtung für Gießformen zum Markieren von Teilen aus Kunststoffmaterial oder von Druckgußteilen, die einen röhrenförmigen Körper (1) aufweist, der die Wand dieser Gießform durchquert, wobei eine Schulter (2) an einer Schulterfläche der die Wand dieser Gießform (3) durchquerenden Öffnung anliegt und ein koaxialer mittiger Körper (5) in dem röhrenförmigen Körper (1) schwenkbar ist, wobei der röhrenförmige Körper (1) eine mit der gravierten inneren Fläche (19) der Form (3) zusammenfallende kreisringförmige Fläche (6) besitzt, während ein Ende (7) des mittigen Körpers (5) mit der kreisringförmigen Fläche (6) bündig ist und ebenfalls graviert ist, wobei die beiden Körper in einer relativen Winkelposition mittels einer elastischen Indexierungsvorrichtung gehalten werden, dadurch gekennzeichnet, daß die Indexierungsvorrichtung eine in den Kopf (8) des mittigen Körpers (5) eingearbeitete Ringnut (9) aufweist, in welche eine geöffnete zylinderförmige Blattfeder (10) eingefügt ist, die mindestens eine radiale Verformung nach außen hin besitzt, die einen Wulst (11) bildet, der mit den Indexierungskerben (12) des röhrenförmigen Körpers (1) des Markierelements zusammenwirken soll, und Drehblockiermittel (13) in der Nut (9) besitzt.

2. Vorrichtung nach Anspruch 1, dadurch gekennzeichnet, daß die Nut (9) des Kopfes (8) des mittigen Körpers (5) mindestens eine Ausstreichabflachung (14) gegenüber von den die Wülste (11) bildenden nach außen hin weisenden radialen Verformungen besitzt.

3. Vorrichtung nach Anspruch 1, dadurch gekennzeichnet, daß die Drehblockiermittel (13) der Blattfeder (10) in der Nut (9) aus mindestens einem Lappen (15) bestehen, der seitlich von einem Rand der Blattfeder (10) herausragt und mit mindestens einer in den Kopf (8) des mittigen Körpers (5) eingearbeiteten Aussparung (16) zusammenwirkt und der seitlich in die Nut (9) mündet.

4. Vorrichtung nach Anspruch 3, dadurch gekennzeichnet, daß die Bereiche des mittigen Körpers (5), die zu jedem Lappen (15) der Blattfeder (10) benachbart sind, zurückgedrückt werden, um eine Festlegung dieses Lappens durch Crimpen zu erzeugen.

5. Vorrichtung nach einem der Ansprüche 1 bis 4, dadurch gekennzeichnet, daß die Blattfeder (10) eine einzige nach außen gerichtete Verformung besitzt, die einen Wulst (11) bildet.

6. Verfahren nach einem der Ansprüche 1 bis 4, dadurch gekennzeichnet, daß die Blattfeder (10) zwei nach außen hin weisende Verformungen besitzt, die zwei diametral entgegengesetzte Wülste (11) und (11') bilden.

7. Vorrichtung nach einem der Ansprüche 1 bis 6, dadurch gekennzeichnet, daß die Blattfeder (10) mindestens einen seitlichen Blockierlappen (15) an jedem ihrer Enden besitzt.

8. Vorrichtung nach einem der Ansprüche 1 bis 7, dadurch gekennzeichnet, daß die Blattfeder (10) mindestens einen seitlichen Blockierlappen (15) in ihrer Mitte besitzt.

9. Vorrichtung nach einem der Ansprüche 1 bis 7, dadurch gekennzeichnet, daß die seitlichen Blockierlappen (15) auf beiden Seiten der Blattfeder (10) paarweise vorliegen und daß die Aufhängungsaussparungen (16) mit denen sie zusammenwirken, entsprechend eingearbeitet sind.

10. Vorrichtung nach einem der Ansprüche 1 bis 9, dadurch gekennzeichnet, daß die Nut (9) eine Schließabflachung (17) besitzt, gegen die die Enden (18) der Blattfeder (10) umgeschlagen sind.
